# NEUE EUROPÄISCHE PATENTSCHRIFT

(11) **EP 1 735 533 B2**
(45) Veröffentlichungstag und Bekanntmachung des Hinweises auf die Entscheidung über den Einspruch: **25.03.2020**
(45) Hinweis auf die Patenterteilung: 24.08.2011
(21) Anmeldenummer: 05716518.5
(22) Anmeldetag: 04.04.2005
(51) Int. Cl.: F03D 1/00, F03D 11/04, E02D 27/42

(54) **VERFAHREN ZUM ERRICHTEN EINES TURMES SOWIE WINDENERGIEANLAGE**
METHOD FOR ERECTING A TOWER AS WELL AS WIND TURBINE
PROCEDE PERMETTANT D'ERIGER UNE TOUR AUSSI BIEN QUE UNE EOLIENNE

(30) Priorität: 02.04.2004 DE 102004017006
(43) Veröffentlichungstag der Anmeldung: 27.12.2006
(73) Patentinhaber: Wobben, Aloys, 26607 Aurich (DE)
(72) Erfinder: Wobben, Aloys, 26607 Aurich (DE)
(74) Vertreter: Eisenführ Speiser
(86) Internationale Anmeldenummer: PCT/EP2005/003499
(87) Internationale Veröffentlichungsnummer: WO 2005/095792

(56) Entgegenhaltungen:
- EP-A- 1 526 278
- EP-A1- 0 447 326
- EP-A1- 1 526 278
- WO-A-2004/057113
- WO-A1-02/27105
- DE-A1- 3 809 113
- DE-A1- 10 009 072
- DE-A1- 10 045 735
- DE-A1- 10 226 996
- DE-B- 1 045 735
- DK-B- 174 190
- GB-A- 2 273 310
- GB-A- 2 273 310
- JP-A- S5 419 504
- US-A- 2 724 261
- US-A- 5 826 387
- US-A- 5 826 387
- US-A- 6 050 038

## Beschreibung

Die vorliegende Erfindung betrifft ein Verfahren zum Errichten eines Turmes einer Windenergieanlage.

US 6,050,038 zeigt ein Fundamentsystem. DE 100 45 735 A1 zeigt eine Befestigung einer Säule auf einem Betonfundament. DE 102 26 996 A1 zeigt ein Verfahren zur Erstellung eines Fundamentes, insbesondere für einen Turm einer Windenergieanlage.

Im Stand der Technik ist es bekannt, bei der Errichtung eines Turmes insbesondere für eine Windenergieanlage ein unteres Turmsegment auf die aus einem Fundament herausragenden Verbindungselemente mit einem Fußflansch aufzusetzen. Dieses untere Turmsegment wird ausgerichtet (nivelliert) und in der ausgerichteten Position fixiert. Dabei entsteht zwischen dem Fußflansch des unteren Turmsegments und der Oberseite des Fundaments eine Fuge. Diese Fuge wird mit einer Vergussmasse aufgefüllt, die dann abbinden muss, bevor sie belastet und der Turm weiter aufgebaut werden kann. Das Abbinden kann durchaus bis zu 24 Stunden dauern.

Zum Handhaben des unteren Turmsegmentes wird ein großer Kran benötigt. Dieser wird aber erst nach dem Abbinden der Vergussmasse weiter für den Aufbau des Turms verwendet. Ein Verlegen des Kranes für die Dauer des Abbindens der Pagelfuge ist jedoch zu aufwändig und unterbleibt deshalb. Damit steht der teure Kran 24 Stunden untätig still.

Aufgabe der Erfindung ist es daher, den Aufbau eines Turmes einer Windenergieanlage zu rationalisieren.

Diese Aufgabe wird durch ein Verfahren zum Errichten eines Turmes einer Windenergieanlage gemäß Anspruch 1 gelöst.

Daher wird ein Verfahren zum Errichten eines Turmes einer Windenergieanlage vorgesehen, welcher ein Fundament mit Segmentankern aufweist, wobei die Verbindungselemente die Oberseite des Fundamentes um ein vorgegebenes Maß überragen. Ein Ring wird an der Oberseite des Fundamentes nivelliert, ausgerichtet und fixiert. Einer durch die Nivellierung, Ausrichtung und Fixierung des Ringes entstandenen Fuge wird mit einer Vergussmasse unterfüttert. Nachdem die Vergussmasse abgebunden ist, wird ein unteres Turmsegment auf dem nivellierten, ausgerichteten und fixierten Ring aufgestellt und damit verbunden. Dabei kann der Ring auch aus mehreren Segmenten gebildet sein.

Dabei liegt der Erfindung die Erkenntnis zugrunde, dass es nicht auf die Nivellierung der unteren Turmsektion ankommt, sondern darauf, dass diese in situ exakt ausgerichtet ist. Dies kann aber auch unter Vermittlung eines Nivellierringes erreicht werden. Ein solcher Nivellierring ist mit einem Flanschring vergleichbar, der mit deutlich geringerem Aufwand handhabbar ist als die untere Turmsektion, z. B. mit einem fahrzeuggestützten Kran. Auch die präzise Ausrichtung (Nivellierung) des Nivellierringes ist einfacher als der entsprechende Vorgang bei einer Turmsektion. Darüber hinaus kann der Nivellierring bei größerer Breite und/oder Dicke aus einem weniger hochwertigen Material als der Turmflansch hergestellt werden. Außerdem kann der Turmflansch in seiner Breite reduziert werden. Dadurch kann die Transportbreite besser ausgenutzt werden.

Nach der Ausrichtung und Fixierung kann der Nivellierring in bekannter Weise mit Füllmaterial unterfüttert werden und das Material kann Abbinden. Während dieser Zeit kann aber der (fahrzeuggestützte) Kran bereits für andere Aufgaben eingesetzt werden, während der zur Handhabung der Turmsektionen erforderliche Kran noch nicht benötigt wird.

Erst wenn das Material in der Fuge ausgehärtet ist, muss der große Kran zur Errichtung des Turmes, z. B. einer Windenergieanlage, bereitstehen und kann dann relativ zügig Segment für Segment den Turm errichten.

Ein besonders rationeller Aufbau eines Turmes kann verwirklicht werden, wenn für das Fundament Fertigteile, insbesondere Beton-Fertigteile, verwendet werden. Diese werden auf der Baustelle einbaufertig angeliefert und zu einem Fundament verbunden, dass dann sofort und damit zeitsparend weiter verwendet werden kann.

Die Erfindung wird nachstehend unter Bezugnahme auf die Figur erläutert.
- Figur 1: zeigt eine schematische Schnittansicht eines Abschnittes eines Turmfußes.
- Figur 2a: zeigt eine Draufsicht auf einen Turmfuß,
- Figur 2b: zeigt eine Schnittansicht entlang des Schnittes A-A des Turmfußes von Figur 2a,
- Figur 2c: zeigt eine vergrößerte Ansicht des Ausschnittes X von Figur 2b, und
- Figur 3: stellt eine perspektivische Ansicht eines Turmfußes dar.

Ein Fundament 10 kann als Fertigteilfundament, aber auch als Ortbeton-Fundament oder Transportbeton-Fundament ausgeführt sein. Mehrere Segmentanker 12 werden in dem Fundament 10 vorgesehen. Diese Segmentanker 12 können in der Form und Anzahl an die besonderen Anforderungen des Fundaments angepasst sein. Bei Fertigteil-Fundamenten werden hingegen mehrere Segmentanker verwendet, die in ihrer Form an das Fertigteil angepasst sind. Natürlich können auch bei Ortbeton- oder Transportbeton-Bauweise mehrere Segmentanker verwendet werden.

Mit dem Segmentanker 12 sind Verbindungselemente 14 verbunden. Die Verbindungselemente 14 können als Gewindestangen ausgeführt sein, die mit Muttern 15 in einer vorgegebenen Position an dem Segmentanker 12 befestigt sind. Die Befestigungselemente 14 erstrecken sich ein vorgegebenes Maß außerhalb des Fundamentes 10 über die Fundamentoberseite 11 hinaus. An Stelle einer Schraubverbindung kann auch eine Schweißverbindung verwendet werden.

An der Fundamentoberseite 11 wird dann ein einstückiger oder mehrstückig ausgeführter Nivellierring 18 angeordnet. Dieser Nivellierring 18 wird exakt nivelliert, so dass er eine perfekt ausgerichtete Basis für den Turm bildet.

Bei der Ausrichtung des Nivellierringes 18 entsteht zwangsläufig eine Fuge 16 zwischen der Fundamentoberseite 11 und dem Nivellierring 18. Sobald der Nivellierring 18 in seiner vorgegebenen Lage fixiert ist, wird die Fuge 16mit einer Vergussmasse 17 verfüllt. Nach dem Abbinden bzw. Aushärten dieser Vergussmasse 17 ist der Nivellierring 18 in seiner gewünschten Lage belastbar und ein unteres Turmsegment mit einem unteren Flanschring 20 und einem dargestellten Turmwandblech 22 kann auf den Nivellierring 18 aufgesetzt werden. Die Gewindestangen 14 greifen durch entsprechend positionierte Löcher im Nivellierring 18 und im unteren Flanschring 20 der unteren Turmsektion hindurch und Muttern 15 werden aufgesetzt, um die untere Turmsektion unter Vermittlung des Nivellierringes 18 fest mit dem Fundament 10 zu verbinden.

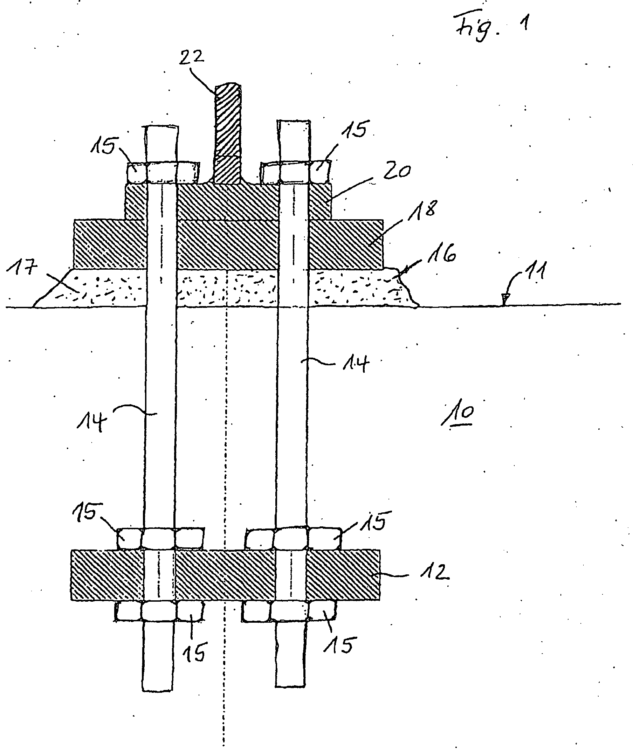

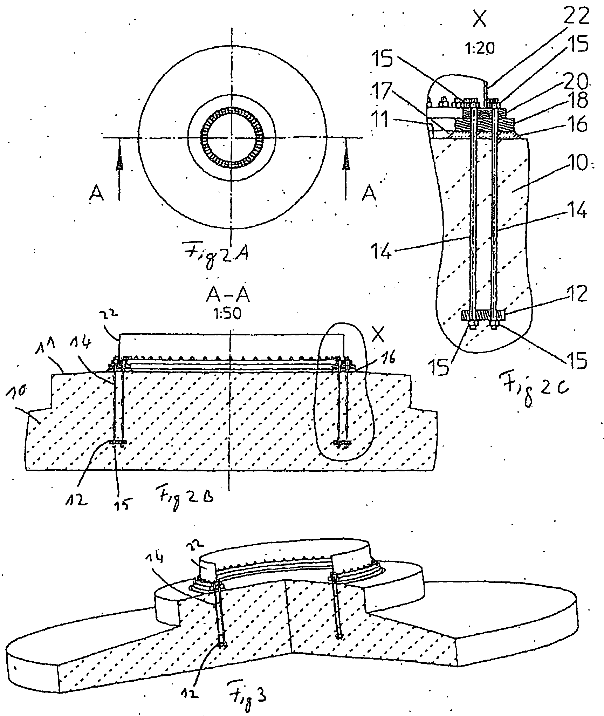

In Figur 2a ist eine Draufsicht auf einen Turmfuß gezeigt. In Figur 2b ist ein Querschnitt entlang des Schnittes A-A aus Figur 2a gezeigt. Wie in Figur 1 ist ein Fundament 10 mit einer Fundamentoberfläche 11 gezeigt. Insbesondere sind zwei Segmentanker 12 sowie vier Gewindestangen 14 gezeigt. In Figur 2c ist der Ausschnitt X vergrößert dargestellt. Diese Darstellung entspricht im Wesentlichen der Darstellung aus Figur 1.

In Figur 3 ist eine perspektivische Darstellung des Turmfußes mit einem aufgeschnittenen Teilstück gezeigt. Die Nivellierung des Turmfußes erfolgt wie gemäß Figur 1 beschrieben.

Da der Turm einer Windenergieanlage, jetzt in einem Zug aufgebaut werden kann, muss für die schnelle Turmerrichtung nur einmal ein Kran bereitgestellt werden, der aber bis dahin andere Aufgaben erfüllen kann.

Auch logistische Aufgaben werden vereinfacht. Bisher musste die untere Turmsektion wenigstens 24 Stunden vor den übrigen Turmteilen auf der Baustelle sein, um sie einwandfrei einbauen zu können. Natürlich konnten auch die übrigen Turmteile gleich mit angeliefert werden. Diese konnten jedoch nicht gleich verbaut werden und beanspruchten daher für die Wartezeit zusätzlichen Platz auf der Baustelle.

Durch das erfindungsgemäße Verfahren können die Turmsegmente in einem Transport zeitnah zum Aufstellzeitpunkt angeliefert werden. Dadurch entfallen auch zusätzliche Umladevorgänge, nämlich vom Transportfahrzeug zunächst zur Zwischenlagerung auf dem Boden und dann später von dort zum Einbauort. Viel mehr können zeitnah (just in time) angelieferte Turmsegmente vom Transportfahrzeug abgeladen und sofort eingebaut werden.

Bei der oben beschriebenen Lösung ist darauf zu achten, dass die Vergussmasse stets mit einer (materialabhängigen) Mindestdicke aufgetragen werden muss, da diese Vergussmasse die Kräfte vom Turm in das Fundament übertragen muss. Wenn die Vergussmasse zu dünn aufgetragen wird, kann diese Schicht brechen und zu erheblichen Schäden führen.

Die oben beschriebene Lösung erweist sich als vorteilhaft hinsichtlich der Rationalisierung der Errichtung eines Turmes einer Windenergieanlage. Andererseits spielen auch die Kosten und Materialeigenschaften eine nicht unerhebliche Rolle. Es sei darauf hingewiesen, dass der unterste Flansch eines Turmsegmentes aus einem sehr hochwertigen Material hergestellt sein muss, um die Lasten aus dem Turm ableiten zu können. Wenn ein derartiger Turm auf ein Betonfundament gestellt wird, dann ist der Beton der Schwächere der beiden Verbindungspartner. Somit muss der Turmflansch in seiner Breite so ausgelegt werden, dass der Beton des Fundamentes nicht überlastet wird. Folglich muss der Flansch im unteren Turmsegment eine für den dabei verwendeten Stahl überdimensionierte Breite erhalten. Dies ist insbesondere hinsichtlich der Kosten des dabei verwendeten Stahles als nachteilhaft zu betrachten.

Durch das Einfügen des Nivellierringes ist es nunmehr gemäß der Erfindung möglich, eine Art Übergangsstufe zwischen dem hoch belastbaren aber kostenintensiven Stahl des unteren Turmsegmentes und dem niedriger belastbaren Beton des Fundamentes einzufügen. Somit kann der Nivellierring eine ausreichende Breite aufweisen, um die Lasten der Windenergieanlage ohne Gefahr in das Fundament abzuleiten. Andererseits kann an dieser Stelle günstigerer bzw. billigerer Stahl verwendet werden, und somit kann der Flansch am unteren Turmsegment entsprechend schmaler und damit material- und kostensparender ausgeführt werden.

Ein weiterer Vorteil kann dann zum Tragen kommen, wenn der Nivellierring in Segmenten ausgeführt und somit segmentweise gestapelt und transportiert werden kann. Wenn der Nivellierring einen großen Durchmesser aufweist, ist dies gemäß der Erfindung aus transporttechnischer Sicht nicht problematisch, weil dieser segmentweise gestapelt werden kann. Das untere Turmsegment weist einen schmaleren Fußflansch mit einer geringeren Breite auf, da nunmehr der Fußflansch materialspezifisch dimensioniert werden kann. Ferner kann somit auch die Transportbreite entsprechend verringert werden.

In dem oben angeführten Beispiel wurde eine Errichtung beispielsweise eines Turmes einer Windenergieanlage an Land beschrieben. Eine Errichtung eines Turmes einer Windenergieanlage Off-shore, d.h. im Wasser oder im Meer, kann ebenfalls mit Hilfe des oben beschriebnen Nivellierringes sowie einer entsprechenden Nivellierung, bevor ein unteres Turmsegment angebracht wird, erfolgen.

## Patentansprüche

1. Verfahren zum Errichten eines Turmes einer Windenergieanlage, mit einem Fundament mit Segmentankern, wobei eine Mehrzahl von Verbindungselementen mit den Segmentankern verbunden sind und eine Oberseite des Fundamentes um ein vorgegebenes Maß überragen, mit den Schritten:
Platzieren des Nivellierringes mit einer Mehrzahl von ersten Durchgangslöchern auf der Oberseite des Fundaments, wobei die Mehrzahl der Verbindungselemente durch die Mehrzahl der ersten Durchgangslöcher geführt wird,
Nivellierung, Ausrichtung und Fixierung eines Nivellierringes an der Oberseite des Fundamentes,
Unterfütterung einer durch die Nivellierung, Ausrichtung und Fixierung des Ringes entstandenen Fuge mit einer Vergussmasse,
Abbinden der Vergussmasse,
Aufstellen eines unteren Turmsegmentes mit einem unteren Flanschring (20) mit einer Mehrzahl von zweiten Durchgangslöchern unmittelbar auf dem nivellierten, ausgerichteten und fixierten Ring, und
Verbinden des unteren Flanschringes mittels der Mehrzahl von Verbindungselementen durch die zweiten Durchgangslöcher mit dem Nivellierring und den Segmentankern.

2. Verfahren nach Anspruch 1, wobei Beton-Fertigteile für das Fundament (10) verwendet werden.

## Claims

1. A method for erecting a tower of a wind turbine, comprising a foundation with segment anchors, wherein a plurality of connecting elements are connected to the segment anchors and project above a top side of the foundation by a predefined amount, comprising the steps:
placing of the levelling ring having a plurality of first through-holes on the top side of the foundation, the plurality of connecting elements being guided through the plurality of first through-holes,
levelling, aligning and fixing of a levelling ring at the top side of the foundation,
underfilling of a gap, produced by the levelling, aligning and fixing of the ring, with a grouting compound,
setting of the grouting compound,
placing of a lower tower segment, comprising a lower flange ring (20) having a plurality of second through-holes, directly on the levelled, aligned and fixed ring, and
connection of the lower flange ring to the levelling ring and the segment anchors by means of the plurality of connecting elements through the second through-holes.

2. A method according to claim 1, wherein prefabricated concrete parts are used for the foundation (10).

## Revendications

1. Procédé servant à ériger une tour d'une éolienne, avec une fondation avec des systèmes d'ancrage segmentés, dans lequel une multitude d'éléments de liaison sont reliés aux systèmes d'ancrage segmentés et dépassent d'un côté supérieur de la fondation d'une mesure prédéfinie, avec les étapes :
de placement de la bague de nivellement avec une multitude de premiers trous de passage sur le côté supérieur de la fondation, dans lequel la multitude des éléments de liaison est guidée à travers la multitude des premiers trous de passage,
de nivellement, d'alignement et de fixation d'une bague de nivellement au niveau du côté supérieur de la fondation,
de rebasage d'un joint apparu du fait du nivellement, de l'alignement et de la fixation de la bague avec une masse de scellement,
de prise de la masse de scellement,
de mise en place d'un segment de tour inférieur avec une bride annulaire inférieure (20) avec une multitude de deuxièmes trous de passage directement sur la bague nivelée, alignée et fixée, et
de liaison de la bride annulaire inférieure au moyen de la multitude d'éléments de liaison par les deuxièmes trous de passage à la bague de nivellement et aux systèmes d'ancrage segmentés.

2. Procédé selon la revendication 1, dans lequel des pièces préfabriquées en béton sont utilisées pour la fondation (10).
